# EUROPEAN PATENT APPLICATION

(11) **EP 1 209 885 A1**
(43) Date of publication of application: **29.05.2002**
(21) Application number: 01117156.8
(22) Date of filing: 14.07.2001
(51) Int. Cl.: H04M 3/18

(54) **System and method of protection from surges and overcurrents in an electrical signal transmission system**

(30) Priority: 17.11.2000 IT MI002470
(71) Applicant: Siemens Information and Communication Networks S.p.A., 20126 Milano (IT)
(72) Inventor: Leardini, Giorgio, 20152 Milano (IT); Ripamonti, Marco, 24020 Torre Boldone (BG) (IT)
(74) Representative: Giustini, Delio

(57) **Abstract**

The invention relates to a system and method for the protection of telecommunications equipment from overcurrents in a continuous line, capable of distinguishing between overcurrents attributable to an impulsive event, in which case the remote power supply to the line can be rapidly restarted, or a permanent cause, in which case the line must be disabled to allow the necessary repairs.

The invention's protective system identifies whether the cause is impulsive type, in which case the normal line supply is re-established without interruption to the operation of the connected stations; otherwise the line must be isolated for maintenance purposes.

The method of the invention consists essentially in the disconnection of the voltage generator from the line when an overcurrent is detected, followed by reconnection after a brief period of interruption. If a further overcurrent is detected, the above operation is repeated and the switch connecting the generator to the line is commutated.

If, within a specified time interval after an initial commutation of the switch, a number of opening/closing cycles in excess of a stipulated threshold occurs, the line will be disabled.

## Description

### SCOPE OF INVENTION

The present invention relates to telecommunications equipment in general, and in particular to a system and method for the protection of an electrical signal transmission system, comprising a base station, transmission line and remote-supplied unit from the base station to the transmission line. In specific terms, the invention makes it possible to prevent interruptions in the operation of the remote unit in the event of a line burn-out.

### BACKGROUND OF INVENTION

Telecommunications equipment is usually protected against surges in transmission lines by the installation of surge arresters at various points on the line to discharge any surges, thus protecting any loads connected to the line.

Surges may occur in a line for various reasons: burn-out, accidental contact between the line and another power line, etc. These causes can be divided into two categories on the basis of the duration of the phenomenon causing the surge: impulsive and non-impulsive surges. The first category includes causes generating surges of high or low intensity, but lasting less than a few milliseconds; the second category includes causes of a longer duration or which are permanent.

In the case of a surge exceeding a given ignition voltage, an electric arc is generated in the surge arresters which creates a discharge path. The activation of a surge arrester causes an overcurrent to circulate in the line, detectable by current sensors further up the line and eliminated by isolating the line from the voltage generator supplying it.

The convenience of the arresters is offset by the problem of the extinction of the electric arc generated in the arrester. For the electric arc to be extinguished, the voltage in the line must fall below the extinction voltage in the arrester and the current supplied by the generator feeding the line must be lower than the maintenance current in the electric arc.

This takes place automatically if the protected line is under alternating voltage, since the zeroising of the voltage extinguishes the electric arc. The problem arises, however, for continuous lines whose rated voltage falls between the arrester's extinction and ignition voltage values and whose current exceeds the maintenance current for the electric arc.

An important category of continuous systems, or remote-supplied systems, is that of telecommunications systems in which a remote unit is, for example, remote-supplied from a base station. In this system, the base station is connected to the remote unit by a line used to transmit signals and power the remote station by direct voltage.

Once an arrester connected to the continuous line is operational, the sole means of disabling it is to interrupt the electrical continuity in the line. This is achieved by a control logic installed further up the line, equipped with current sensors and driving a switch: as soon as the current exceeds a predetermined value, the control logic detects the presence of an overcurrent and takes the necessary countermeasures. Known overcurrent protection systems merely open the switch, thus isolating the line, but also interrupting the remote supply to the line for a length of time likely to cause overcurrent earth leakage. The remote unit is therefore deprived of its supply for the duration of the interruption, leading to malfunction, given that it is generally recognised that telecommunications systems must be structured to ensure continuous functioning even under extreme conditions, such as those induced by a burn-out event.

The requirement is therefore for a system and method for the protection of a continuous line from overcurrents; the system must be capable of identifying when the overcurrent detected is attributable to impulsive phenomena not likely to damage the line, such as the activation of an arrester as a result of burn-out not likely to interrupt the supply to the remote unit for a period of time in excess of a predefined entity, and thus not likely to interrupt the functioning of the remote unit.

### AIM AND SUMMARY OF INVENTION

The solution has been provided in the form of the invention, which relates to a system and method for the protection of telecommunications equipment from overcurrents in a continuous line, capable of distinguishing between overcurrents attributable to an impulsive event, in which case the remote power supply to the line can be rapidly restarted, or a permanent cause, in which case the line must be disabled to allow the necessary repairs.

The invention's protective system identifies whether the cause is impulsive, in which case the normal line supply is re-established without interruption to the operation of the connected stations; otherwise the line must be isolated for maintenance purposes.

The method of the invention consists essentially in the disconnection of the voltage generator from the line when an overcurrent is detected, followed by reconnection after a brief period of interruption. If a further overcurrent is detected, the above operation is repeated and the switch connecting the generator to the line commutated.

If, within a specified time interval after an initial commutation of the switch, a number of opening/closing cycles in excess of a stipulated threshold occurs, the fault is identified as attributable to a non-impulsive surge or short-circuit, and the line is disabled. When the relevant period of time has elapsed, the system is zero-set and awaits the detection of a further overcurrent.

The invention is more precisely defined in the attached claims.

### BRIEF DESCRIPTION OF DRAWINGS

The many aspects and advantages of the invention can be further demonstrated by a detailed description of the invention with reference to the attached drawings, as follows:
**Figure 1** is the diagram of a telecommunications systems with continuous remote supply to the transmission line and implementation of the invention's protection system in the Power Source unit;
**Figure 2** provides a detailed view of the Power Source unit in Figure 1;
**Figure 3** is a preferred form of implementation of the Remote Feeding Controller unit in Figure 2;
**Figure 4** is a possible time diagram of the principal signals of Fig. 2 and 3, according to the invention method.

### DESCRIPTION OF A FORM OF IMPLEMENTATION OF THE INVENTION

Given the predominance of remote-supplied units, this document will refer to this type of system, although the system and method of this invention can be advantageously used to protect any line powered by a direct voltage generator from overcurrents.

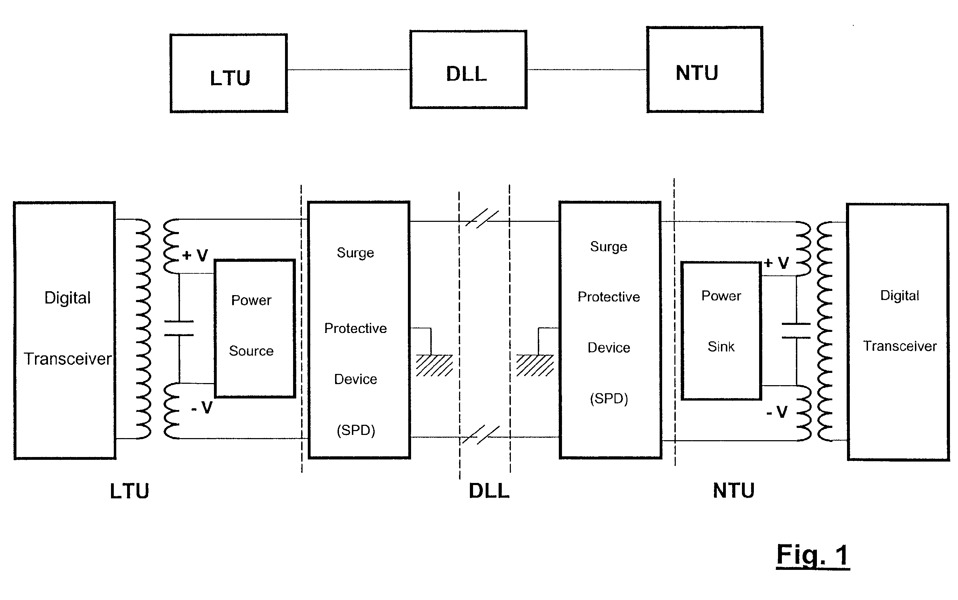

Fig. 1 shows the circuit diagram for a remote-powered telecommunications system using a continuous line. This generally consists of a basic LTU (Line Termination Unit) station connected via a DLL (Digital Local Line) transmission line to a NTU (Network Termination Unit) remote station.

The diagram in Fig. 1 also shows SPD (Surge Protective Devices), for example, standard gas arresters.

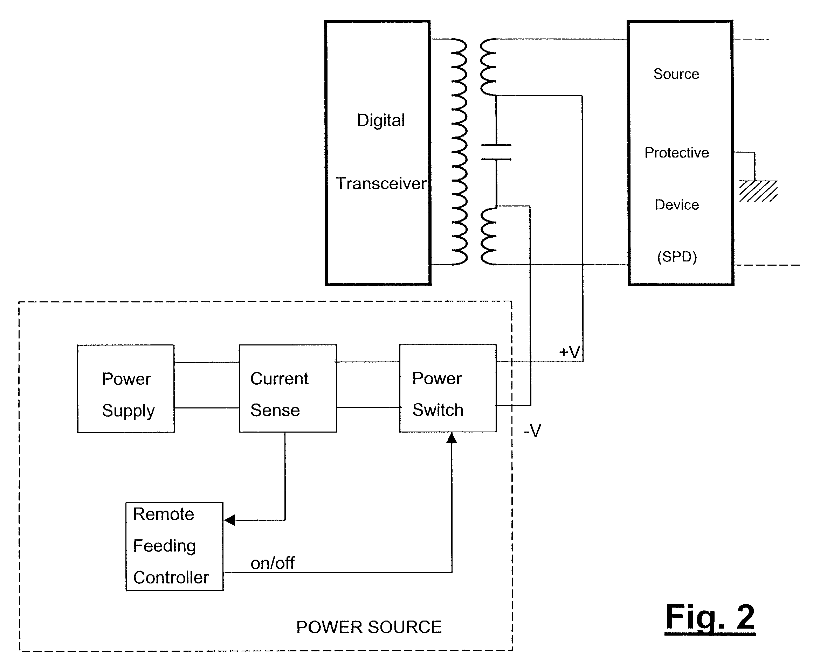

The line is powered by a Power Supply voltage generator connected to it by a Power Switch. Figure 2 also shows the invention's overcurrent protection system, essentially comprising a Current Sense sensing unit, producing a signal representative of the current circulating in the line, and a control logic. The control logic is implemented in the Remote Feeding Controller which opens or closes the mains switch for the line as a function of the signal received from the Current Sense unit.

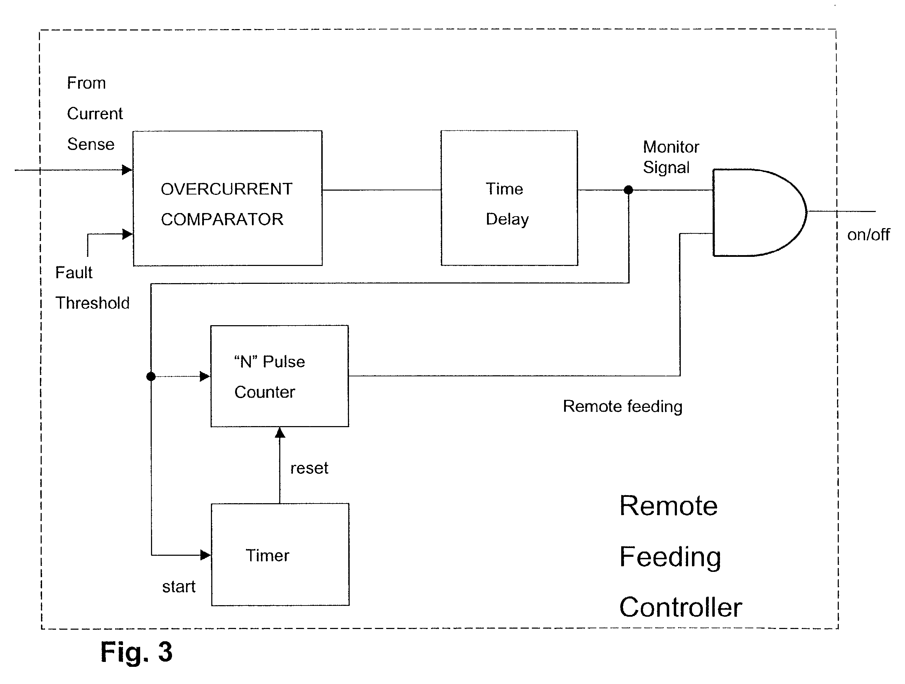

According to a preferred implementation of the invention's protection system, the Remote Feeding Controller comprises the circuit illustrated in Fig. 3. The sensing signal generated by the Current Sense is compared with a permitted maximum value (Fault Threshold) by the OVERCURRENT COMPARATOR, producing a high active signal until the line current falls below that value.

The Monitor Signal is a delayed replica (obtained using a Time Delay unit) from the comparator outlet and is sent to a module N "N" Pulse Counter, which counts the trailing edges, only deactivating the Remote Feeding enabling signal if N trailing edges have been counted. This counter is zero-set by a monostable Timer, normally disabled, which remains in the active state for a given period of time. The monostable Timer is activated from an initial trailing edge of the Monitor Signal and produces a zero-set impulse in the "N" Pulse Counter at the moment of transition to the stable state.

Finally, the on/off control signal only activates the Power Switch if the Monitor Signal and Remote Feeding signals are simultaneously active.

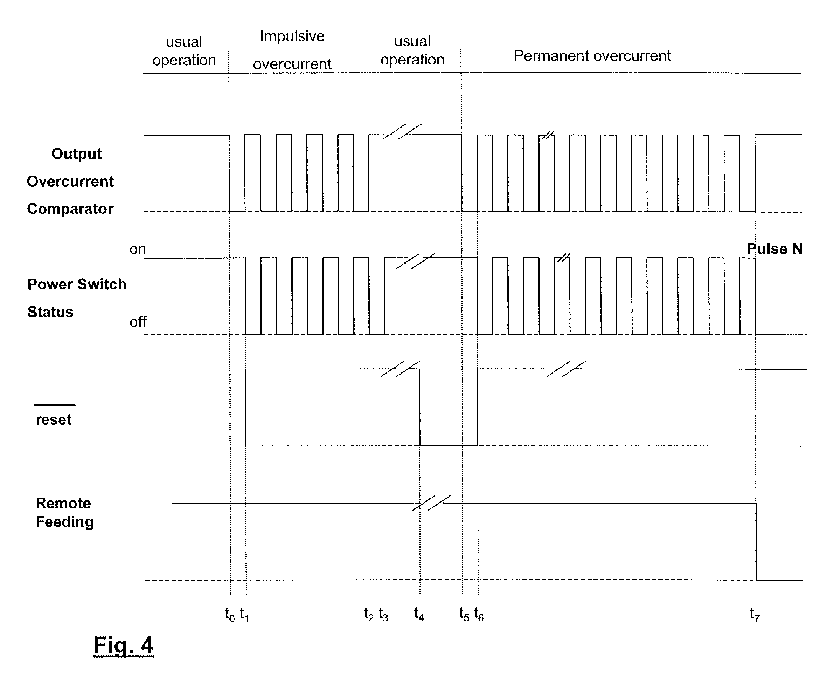

Fig. 4 shows a possible temporal evolution of the principal signals in the invention's system applying the invention's protection method. While the line current remains below the threshold value, normal operating conditions prevail. When, however (time t0) an overcurrent occurs, for example, due to a surge liable to activate an arrester, the line current exceeds the Fault Threshold value.

After a delay (time t1), determined by the Time Delay block, the Monitor Signal commutates, activating the switch and Timer. As a result of the activation of the switch, the current flowing in the line is cancelled and, after a given delay, the Monitor Signal is reactivated and the switch restored to its original position.

If the line current again exceeds the threshold, the cycle described above is repeated, otherwise (time t2) the signal corresponding to the outlet of the OVERCURRENT COMPARATOR unit remains active and the line is restored to normal functioning (time t3). After this time t3 the "N Pulse Counter" is reset at zero (time t4) as confirmation that normal operating conditions have been restored. For graphics purposes, Figure 4 also shows the scenario in which a permanent overcurrent occurs as from time t5.

After a further delay (time t6) determined by the Time Delay block, the Monitor Signal commutates, activating the switch and Timer. Cycles wholly coincident with those described above are then repeated, and as soon as "N" Pulse Counter counts N trailing edges of the Monitor Signal, the Remote Feeding enabling signal is disabled (time t7), triggering the permanent opening of the switch. For this to happen, the counter must count N trailing edges before the Timer can produce the zero reset impulse when a stated interval of time has elapsed after the initial Monitor Signal trailing edge.

The time interval between the activation of the Timer and the production of the reset impulse must be long enough to allow the "N" Pulse Counter to count N consecutive trailing edges of the Monitor signal in case of an overcurrent, but short enough to allow the counter to be zero-reset in the event of an impulsive overcurrent before a further overcurrent occurs in the line. Typically, the Timer is set to remain in the active state for a period between 100 ms and 150 ms, the product between N and the delay introduced by the Time delay not exceeding 100 ms.

Using the invention's protection method, the line is only isolated in the event of a persistent fault inducing the circulation of an overcurrent for a time at least equivalent to the product between N and the delay introduced by the Time Delay. For shorter-term causes, for example, the activation of an arrester due to burn-out in the line or other impulsive event, the line remains live, albeit at intervals, allowing the connected stations to continue without interruption to their normal operation.

## Claims

1. Method of protection from power surges and overcurrent of a continuously remote-supplied transmission system with a continuous voltage generator (Power Supply) connected to the line by a Power Switch, sensors (Current Sense) producing a signal representative of the current circulating in the line, and control logic (Remote Feeding Controller) controlling the opening or closure of the (Power Switch).
The method includes the following operations:
a) comparing this representative signal with a reference value and opening the Power Switch if a current in excess of a stated permitted maximum value (Fault Threshold) is circulating in the line;
b) a predetermined time after the opening of the switch, closing of the Power Switch for a second predetermined time;
c) repeating the operations a) and b), and counting the number of times the Power Switch is commutated up to the calculation does not exceed a preset value (N) and zero-setting the unit a third predefined interval of time after the commutation initially counted;
d) the final opening of the Power Switch.

2. The protection method described in claim 1 in which the first and second time intervals are the same.

3. The method according to either of claims 1 and 2 in which the third time interval is between 100 ms and 150 ms.

4. The method according to either of claims 2 and 3 in which the product between this predefined value (N) and this initial preset time is less than 100 ms.

5. A system for the protection from overcurrent of a continuous line in a transmission network equipped with a continuous voltage generator (Power Supply) connected to the line by a Power Switch, the system also including sensors (Current Sense) producing a signal representative of the current circulating in the line, a control logic (Remote Feeding Controller) controlling the opening or closing of the Power Switch by an on/off control produced as a function of that representative signal according to the method defined in any of the above claims, **characterised in that** the control logic (Remote Feeding Controller) includes
an OVERCURRENT COMPARATOR which compares the representative signal with a reference value, producing a signal of true logical comparison until a current less than the permitted maximum (Fault Threshold) is circulating in the line;
a delay circuit (Time Delay) cascading to the OVERCURRENT COMPARATOR producing a delayed replica (Monitor Signal) of the logical comparison signal;
a module N "N" Pulse Counter, counting the variation edges of that delayed replica (Monitor Signal), zero reset (Reset) and producing an enabling signal (Remote Feeding);
a monostable timing circuit (Timer) stably disabled, activated by a variation edge of the delayed replica (Monitor Signal), producing the zero reset impulse (reset) at the moment of deactivation;
an AND logic gate receiving input of the enabling signal (Remote Feeding) and delayed replica (Monitor signal), producing the on/off control.

6. The system in claim 5, in which the monostable (Timer) remains in the unstable state for between 100 ms and 150 ms.
